# EUROPÄISCHE PATENTSCHRIFT

(11) **EP 2 627 469 B1**
(45) Veröffentlichungstag und Bekanntmachung des Hinweises auf die Patenterteilung: **05.11.2014**
(21) Anmeldenummer: 11748368.5
(22) Anmeldetag: 23.08.2011
(51) Int. Cl.: B23K 9/095, F16B 31/02, F16B 37/06

(54) **VERFAHREN ZUM HERSTELLEN VON DREHMOMENTBEGRENZTEN BEFESTIGUNGSVORRICHTUNGEN**
PROCEDURE FOR MAKING TORQUE LIMITED FIXTURES
PROCÉDÉ DE FABRICATION DE DISPOSITIFS DE FIXATION COUPLE LIMITÉ

(30) Priorität: 11.10.2010 DE 102010042260
(43) Veröffentlichungstag der Anmeldung: 21.08.2013
(73) Patentinhaber: HILTI Aktiengesellschaft, 9494 Schaan (LI)
(72) Erfinder: ECKSTEIN, Andreas, 86899 Landsberg am Lech (DE); GOLDT, Mathias, A-6800 Feldkirch (AT); SCHÄFFER, Marc, A-6800 Feldkirch-Nofels (AT); APPL, Joerg, CH-9470 Buchs (CH); DIJKHUIS, Arjen Detmer, A-6800 Feldkirch (AT)
(74) Vertreter: Hilti Aktiengesellschaft Corporate Intellectual Property
(86) Internationale Anmeldenummer: PCT/EP2011/064449
(87) Internationale Veröffentlichungsnummer: WO 2012/048932

(56) Entgegenhaltungen:
- EP-A1- 1 347 183
- WO-A2-2004/033923
- US-A1- 2002 076 295

## Beschreibung

Die Erfindung betrifft ein Verfahren zum Herstellen von drehmomentbegrenzten Befestigungsvorrichtungen, beispielweise von Abreissmuttern oder Abreissschrauben, welche jeweils ein erstes Kopfelement mit Angriffsmitteln für ein Befestigungswerkzeug und ein zweites Kopfelement aufweisen, welches mit dem ersten Kopfelement über eine Schweissverbindung verbunden ist, die bei einem vorgegebenen Grenzdrehmoment reisst. Bei dem Herstellungsverfahren wird eine Vielzahl von ersten Kopfelementen und zweiten Kopfelementen mit derselben Geometrie bereitgestellt, und es werden jeweils ein erstes Kopfelement und ein zweites Kopfelement in einem Schweissprozess unter Herstellen der Schweissverbindung verschweisst.

Es sind Abreissmuttern oder Abreissschrauben mit zwei Kopfelementen bekannt, die über eine Schweissverbindung miteinander verbunden sind. Beim Anbringen dieser Muttern bzw. Schrauben wird mittels eines Befestigungswerkzeugs ein Drehmoment auf das erste Kopfelement aufgebracht, wobei das Drehmoment zu Beginn des Befestigungsvorganges über die Schweissverbindung auf das zweite Kopfelement übertragen wird. Wird am Ende des Befestigungsvorganges ein vorgegebenes Grenzdrehmoment erreicht, so schert das erste Kopfelement an der Schweissverbindung vom zweiten Kopfelement ab. Durch dieses Abscheren wird das maximal auf das zweite Kopfelement wirkende Drehmoment begrenzt.

Eine solche Abreissmutter geht beispielsweise aus der US 2002/076295 A1 hervor. Diese Druckschrift sieht vor, die beiden Kopfelemente durch Laserschweissen miteinander zu verbinden.

Aufgabe der Erfindung ist es, ein Verfahren zum Herstellen von drehmomentbegrenzten Befestigungsvorrichtungen anzugeben, welches es erlaubt, in besonders einfacher und kostengünstiger Weise Befestigungsvorrichtungen mit einer Vielzahl verschiedener Grenzdrehmomente herzustellen.

Die Aufgabe ist durch die Merkmale des unabhängigen Anspruchs gelöst. Vorteilhafte Weiterbildungen sind in den Unteransprüchen dargelegt.

Das erfindungsgemässe Verfahren ist dadurch gekennzeichnet, dass zumindest zwei Schweissprozesse unter Anwendung zumindest eines unterschiedlichen Schweissparameters durchgeführt werden, so dass bei gleicher Bauteilgeometrie unterschiedliche Grenzdrehmomente erhalten werden.

Ein Grundgedanke der Erfindung kann darin gesehen werden, das Grenzdrehmoment nicht durch Variation der Geometrie der Bauteile, insbesondere nicht durch Variation der Formen und Abmessungen der Kopfelemente oder der Zahl der Schweisspunkte einzustellen. Vielmehr werden erfindungsgemäss unterschiedliche Grenzdrehmomente dadurch erhalten, dass zumindest ein Schweissparameter variiert wird. Da die Schweissparameter das Bruchverhalten der Schweissstelle bestimmen, ermöglicht eine gezielte Änderung zumindest eines Schweissparameters ein gezieltes Einstellen des maximalen Drehmomentes, an dem die beiden Kopfelemente voneinander abscheren. Die Erfindung ermöglicht es somit, die Grenzdrehmomente der Bauteile an die jeweiligen Bedürfnisse anzupassen, ohne die Geometrie der Halbzeuge, d.h. der Kopfelemente, ändern zu müssen. Aufwändige Anpassungen der Fertigungswerkzeuge an unterschiedliche Geometrien können daher entfallen. Gleichzeitig können die Lagerkosten reduziert werden, da nur ein Typ Kopfelemente vorrätig gehalten werden muss.

Sofern als Schweissverfahren Widerstandsschweissen eingesetzt wird, ist es besonders bevorzugt, dass zumindest zwei Schweissprozesse unter Anwendung einer unterschiedlichen Schweissspannung durchgeführt werden, so dass bei gleicher Bauteilgeometrie unterschiedliche Grenzdrehmomente erhalten werden. Die Schweissspannung kann in besonders einfacher Art und Weise variiert werden. Gemäss dieser Ausführungsform ist der zumindest eine unterschiedliche Schweissparameter die Schweissspannung. Es können auch noch weitere Schweissparameter unterschiedlich sein.

Sofern als Schweissverfahren Widerstandsschweissen eingesetzt wird, ist es alternativ oder zusätzlich zweckmässig, dass zumindest zwei Schweissprozesse unter Anwendung einer unterschiedlichen Schweissstromstärke durchgeführt werden, so dass bei gleicher Bauteilgeometrie unterschiedliche Grenzdrehmomente erhalten werden. Die Variation der Schweissstromstärke ermöglicht eine besonders gute Prozesskontrolle. Gemäss dieser Ausführungsform ist der zumindest eine unterschiedliche Schweissparameter die Schweissstromstärke. Es können auch noch weitere Schweissparameter unterschiedlich sein.

Ferner kann es zweckmässig sein, dass zumindest zwei Schweissprozesse unter Anwendung einer unterschiedlichen Prozesstemperatur durchgeführt werden, so dass bei gleicher Bauteilgeometrie unterschiedliche Grenzdrehmomente erhalten werden. Gemäss dieser Ausführungsform ist der zumindest eine unterschiedliche Schweissparameter die Prozesstemperatur. Es können auch noch weitere Schweissparameter unterschiedlich sein. Die Prozesstemperatur kann als bestimmender Parameter auch dann herangezogen werden, wenn ein nicht-elektrisches Schweissverfahren verwendet wird.

Eine weiter bevorzugte Ausführungsform liegt darin, dass zumindest zwei Schweissprozesse unter Anwendung einer unterschiedlichen Vorspannung zwischen den Kopfelementen durchgeführt werden, so dass bei gleicher Bauteilgeometrie unterschiedliche Grenzdrehmomente erhalten werden. Gemäss dieser Ausführungsform ist der zumindest eine unterschiedliche Schweissparameter die Vorspannung, die beim Verschweissen zwischen den jeweils zu verbindenden Kopfelementen herrscht. Es können auch noch weitere Schweissparameter unterschiedlich sein. Eine Variation der Vorspannung zwischen den zu verschweissenden Kopfelementen ermöglicht es, Bauteile mit einem besonders breiten Grenzdrehmomentbereich zur Verfügung zu stellen.

Beispielsweise kann vorgesehen sein, dass die drehmomentbegrenzten Befestigungsvorrichtungen Abreissmuttern sind. Insbesondere in diesem Fall kann es zweckmässig sein, dass das erste Kopfelement einen Aussenmehrkant und/oder dass das zweite Kopfelement ein Innengewinde aufweist. Die Befestigungsvorrichtungen können aber auch zum Beispiel Abreissschrauben sein. In diesem Fall kann es zweckmässig sein, dass das erste Kopfelement einen Aussenmehrkant und/oder dass das zweite Kopfelement ein Schaftelement mit einem Aussengewinde aufweist. Der Aussenmehrkant kann insbesondere ein Sechskant sein.

Werden die erfindungsgemässen Befestigungselemente bei Ankern, insbesondere bei Betonankern eingesetzt, so ist es möglich, den korrekten Sitz der Anker zu prüfen, ohne einen Drehmomentschlüssel zu verwenden, da das korrekte Anzugsdrehmoment am Abscheren der Schweissverbindung erkennbar ist. Die Überreste der Verschweissung, die nach dem Abscheren auf dem zweiten Kopfelement zurückbleiben, erlauben dabei eine nachträgliche Identifizierung der drehmomentbegrenzten Befestigungsvorrichtungen. Diese Überreste ermöglichen eine Kontrolle, ob das notwendige Drehmoment aufgebracht wurde, und zwar auch lange nachdem das Befestigungselement bzw. der Anker installiert wurde, was im Rahmen von Inspektionen hilfreich ist.

Demgemäss umfasst die Erfindung auch die Verwendung einer drehmomentbegrenzten Befestigungsvorrichtung welche ein erstes Kopfelement mit Angriffsmitteln für ein Befestigungswerkzeug und ein zweites Kopfelement aufweist, welches mit dem ersten Kopfelement über eine Schweissverbindung verbunden ist, die bei einem vorgegebenen Grenzdrehmoment reisst, insbesondere hergestellt in einem erfindungsgemässen Verfahren, zum Setzen eines Ankers, insbesondere Betonankers.

Die Erfindung wird nachstehend anhand von bevorzugten Ausführungsbeispielen näher erläutert. Es zeigen schematisch:
- Fig. 1: ein Ausführungsbeispiel einer drehmomentbegrenzten Befestigungsvorrichtung beim erfindungsgemässen Schweissvorgang;
- Fig. 2: eine erfindungsgemässe drehmomentbegrenzte Befestigungsvorrichtung; und
- Fig. 3: die Befestigungsvorrichtung aus Fig. 2 nach Erreichen des Grenzdrehmoments.

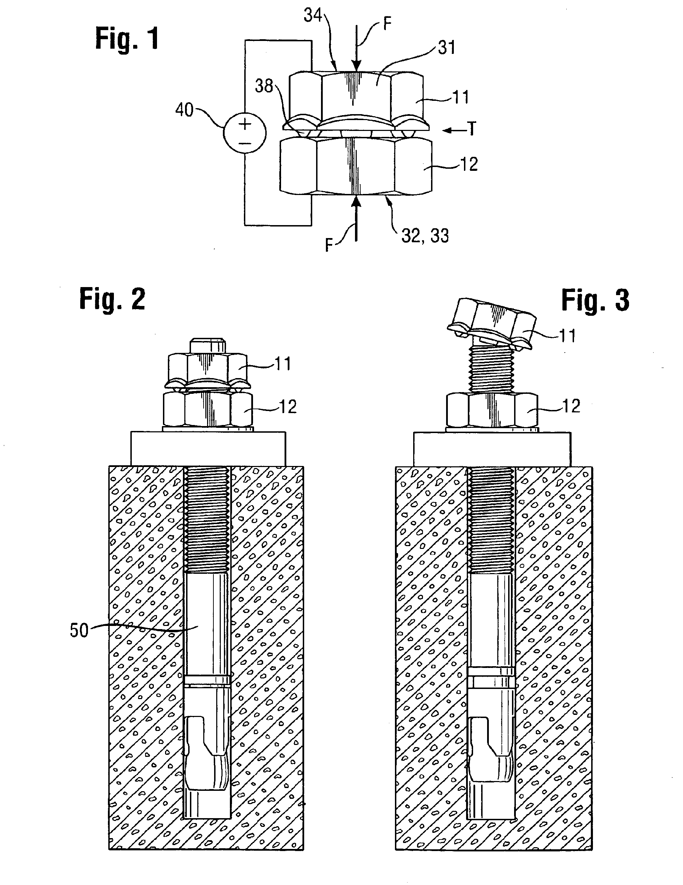

In Figur 1 ist die Herstellung einer als Abreissmutter ausgebildeten erfindungsgemässen drehmomentbegrenzten Befestigungsvorrichtung schematisch dargestellt. Die dargestellte Abreissmutter weist ein erstes Kopfelement 11 auf, an dessen Aussenseite ein als Sechskant ausgebildeter Aussenmehrkant 31 zum Ansetzen eines Drehwerkzeuges angeordnet ist. Ferner weist die Abreissmutter ein zweites Kopfelement 12 mit einer Durchgangsbohrung 32 auf, in der ein Innengewinde 33 ausgebildet ist. Das erste Kopfelement 11 weist ebenfalls eine Durchgangsbohrung 34 auf, deren lichte Weite jedoch grösser als die des Innengewindes 33 des zweiten Kopfelements 12 ist, damit eine mit dem Innengewinde 33 des zweiten Kopfelements 12 korrespondierende Gewindestange frei durch die Durchgangsbohrung 34 im ersten Kopfelement 11 durchtreten kann. Das erste Kopfelement 11 weist stirnseitig Fusselemente 38 auf, die von der Stirnseite des ersten Kopfelementes 11 vorstehen, und die zum Herstellen einer Schweissverbindung mit dem zweiten Kopfelement 12 dienen. Im Ausführungsbeispiel der Figur 1 sind drei Fusselemente 38 vorgesehen, welche jeweils die Form eines Dreiecksprismas aufweisen.

Wie in Figur 1 dargestellt ist, werden die beiden Kopfelemente 11 und 12 bei der Fertigung der Befestigungsvorrichtung mit fluchtenden Durchgangsbohrungen 32 bzw. 34 so angeordnet, dass die Fusselemente 38 des ersten Kopfelements 11 auf dem zweiten Kopfelement 12 aufstehen. Die beiden Kopfelemente 11 und 12 werden zum Widerstandsschweissen mit den gegensätzlichen Polen einer Spannungsquelle 40 verbunden und mit elektrischem Strom beaufschlagt. Dabei wird zwischen den beiden Kopfelemente 11 und 12 an den Fusselemente 38 eine Schweissverbindung gebildet.

Nach der Erfindung werden stets Kopfelemente 11 und 12 derselben Geometrie verwendet. Um dennoch Befestigungsvorrichtungen mit unterschiedlichen Grenzdrehmomenten an der Schweissverbindung zu erhalten, werden beim Schweissen unterschiedliche Prozessparameter gewählt. So kann beispielsweise die von der Spannungsquelle 40 abgegebene Spannung und/oder der durch die Kopfelemente 11 und 12 beim Schweissen fliessende Strom variiert werden. Alternativ oder zusätzlich kann auch die an der Schweissstelle herrschende Prozesstemperatur T variiert werden. Weiter alternativ oder zusätzlich kann auch die Vorspannung, d.h. die Anpresskraft F variiert werden, mit der beim Schweissvorgang die Kopfelemente 11 und 12 zusammengepresst werden.

In den Figuren 2 und 3 ist Verwendung einer erfindungsgemäss hergestellten Befestigungsvorrichtung mit verschweissten Kopfelemente 11 und 12 an einem Anker 50 gezeigt. Wie Figur 2 zeigt, sind die Kopfelemente 11 und 12 vor dem Setzen verbunden. Wird, wie in Figur 3 gezeigt, das Grenzdrehmoment erreicht, so schert das erste Kopfelement 11, an dem das Drehmoment aufgebracht wird, vom zweiten Kopfelement 12 ab, so dass das zweite Kopfelement 12 nicht weiter angezogen wird.

## Patentansprüche

1. Verfahren zum Herstellen von drehmomentbegrenzten Befestigungsvorrichtungen, welche jeweils ein erstes Kopfelement (11) mit Angriffsmitteln für ein Befestigungswerkzeug und ein zweites Kopfelement (12) aufweisen, welches mit dem ersten Kopfelement (11) über eine Schweissverbindung verbunden ist, die bei einem vorgegebenen Grenzdrehmoment reisst, bei dem
eine Vielzahl von ersten Kopfelementen (11) und zweiten Kopfelementen (12) mit derselben Geometrie bereitgestellt wird, und jeweils ein erstes Kopfelement (11) und ein zweites Kopfelement (12) in einem Schweissprozess unter Herstellen der Schweissverbindung verschweisst werden,
**dadurch gekennzeichnet, dass**
zumindest zwei Schweissprozesse unter Anwendung zumindest eines unterschiedlichen Schweissparameters durchgeführt werden, so dass bei gleicher Bauteilgeometrie unterschiedliche Grenzdrehmomente erhalten werden.

2. Verfahren nach Anspruch 1, **dadurch gekennzeichnet, dass** zumindest zwei Schweissprozesse unter Anwendung einer unterschiedlichen Schweissspannung durchgeführt werden, so dass bei gleicher Bauteilgeometrie unterschiedliche Grenzdrehmomente erhalten werden.

3. Verfahren nach Anspruch 1 oder 2, **dadurch gekennzeichnet, dass** zumindest zwei Schweissprozesse unter Anwendung einer unterschiedlichen Schweissstromstärke durchgeführt werden, so dass bei gleicher Bauteilgeometrie unterschiedliche Grenzdrehmomente erhalten werden.

4. Verfahren nach einem der vorstehenden Ansprüche, **dadurch gekennzeichnet, dass** zumindest zwei Schweissprozesse unter Anwendung einer unterschiedlichen Prozesstemperatur durchgeführt werden, so dass bei gleicher Bauteilgeometrie unterschiedliche Grenzdrehmomente erhalten werden.

5. Verfahren nach einem der vorstehenden Ansprüche, **dadurch gekennzeichnet, dass** zumindest zwei Schweissprozesse unter Anwendung einer unterschiedlichen Vorspannung zwischen den Kopfelementen (11, 12) durchgeführt werden, so dass bei gleicher Bauteilgeometrie unterschiedliche Grenzdrehmomente erhalten werden.

6. Verfahren nach einem der vorstehenden Ansprüche, **dadurch gekennzeichnet, dass** die drehmomentbegrenzten Befestigungsvorrichtungen Abreissmuttern sind, wobei das erste Kopfelement (11) einen Aussenmehrkant (31) und das zweite Kopfelement (12) ein Innengewinde (33) aufweist.

7. Verwendung einer drehmomentbegrenzten Befestigungsvorrichtung welche ein erstes Kopfelement (11) mit Angriffsmitteln für ein Befestigungswerkzeug und ein zweites Kopfelement (12) aufweist, welches mit dem ersten Kopfelement (11) über eine Schweissverbindung verbunden ist, die bei einem vorgegebenen Grenzdrehmoment reisst, hergestellt in einem Verfahren nach einem der Ansprüche 1 bis 6, zum Setzen eines Ankers, insbesondere Betonankers.

## Claims

1. Method of producing torque-limited fasteners, each comprising a first head element (11) with engagement means for a fastening tool and a second head element (12) joined to the first head element (11) by means of a welded joint that breaks at a predetermined limiting torque, wherein
a plurality of first head elements (11) and second head elements (12) having the same geometry are provided and respective first head elements (11) and second head elements (12) are welded together by a welding process, thereby producing the welded joint,
**characterised in that**
at least two welding processes are carried out using at least one different welding parameter so as to obtain different limiting torques for components having the same geometry.

2. Method according to claim 1, **characterised in that** at least two welding processes are carried out using a different welding voltage so as to obtain different limiting torques for components having the same geometry.

3. Method according to claim 1 or claim 2, **characterised in that** at least two welding processes are carried out using a different welding current intensity so as to obtain different limiting torques for components having the same geometry.

4. Method according to one of the preceding claims, **characterised in that** at least two welding processes are carried out using a different processing temperature so as to obtain different limiting torques for components having the same geometry.

5. Method according to one of the preceding claims, **characterised in that** at least two welding processes are carried out using different pretension between the head elements (11, 12) so as to obtain different limiting torques for components having the same geometry.

6. Method according to one of the preceding claims, **characterised in that** the torque-limited fasteners are shear nuts, the first head element (11) comprising an external polygon (31) and the second head element (12) comprising an internal thread (33).

7. Use of a torque-limited fastener comprising a first head element (11) with engagement means for a fastening tool and a second head element (12) joined to the first head element (11) by means of a welded joint that breaks at a predetermined limiting torque produced by a method according to one of claims 1 to 6 for setting an anchor, in particular a concrete anchor.

## Revendications

1. Procédé de fabrication de dispositifs de fixation à couple limité comportant respectivement un premier élément de tête (11) avec des moyens d'engagement pour un outil de fixation et un second élément de tête (12), lequel second élément de tête est relié au premier élément de tête (11) par un assemblage soudé qui se rompt à un couple limite prédéfini, dans lequel
une pluralité de premiers éléments de tête (11) et de seconds éléments de tête (12) ayant la même géométrie est fournie, et un premier élément de tête (11) et un second élément de tête (12) sont respectivement soudés au cours d'un procédé de soudage afin de réaliser l'assemblage soudé,
**caractérisé en ce que**
au moins deux procédé de soudage sont mis en oeuvre en utilisant au moins un paramètre de soudage différent, de telle sorte que différents couples limites sont obtenus avec une géométrie de pièce identique.

2. Procédé selon la revendication 1, **caractérisé en ce qu'**au moins deux procédé de soudage sont mis en oeuvre en utilisant une tension de soudage différente, de telle sorte que différents couples limites sont obtenus avec une géométrie de pièce identique.

3. Procédé selon la revendication 1 ou 2, **caractérisé en ce qu'**au moins deux procédé de soudage sont mis en oeuvre en utilisant une intensité de courant de soudage différente, de telle sorte que différents couples limites sont obtenus avec une géométrie de pièce identique.

4. Procédé selon l'une des revendications précédentes, **caractérisé en ce qu'**au moins deux procédé de soudage sont mis en oeuvre en utilisant une température de procédé différente, de telle sorte que différents couples limites sont obtenus avec une géométrie de pièce identique.

5. Procédé selon l'une des revendications précédentes, **caractérisé en ce qu'**au moins deux procédé de soudage sont mis en oeuvre en utilisant une prétension différente entre les éléments de tête (11, 12), de telle sorte que différents couples limites sont obtenus avec une géométrie de pièce identique.

6. Procédé selon l'une des revendications précédentes, **caractérisé en ce que** les dispositifs de fixation à couple limité sont des écrous de rupture, dans lequel le premier élément de tête (11) comporte un polygone extérieur (31) et le second élément de tête (12) comporte une filetage intérieur (33).

7. Utilisation d'un dispositif de fixation à couple limité comportant un premier élément de tête (11) avec des moyens d'engagement pour un outil de fixation et un second élément de tête (12), lequel second élément de tête est relié au premier élément de tête (11) par un assemblage soudé, qui se rompt à un couple limite prédéfini, réalisé au cours d'un procédé selon l'une des revendications 1 à 6 pour installer un ancrage, en particulier un ancrage en béton.
